# EUROPEAN PATENT APPLICATION

(11) **EP 2 218 895 A1**
(43) Date of publication of application: **18.08.2010**
(21) Application number: 10163793.2
(22) Date of filing: 13.11.2003
(51) Int. Cl.: F02M 25/07, F02D 9/10, F02D 41/00

(54) **Exhaust gas recirculation device**

(30) Priority: 15.11.2002 JP 2002331852
(62) Divisional of application: 03025982.4
(71) Applicant: DENSO CORPORATION, Kariya City Aichi 448-8661 (JP)
(72) Inventor: Nanba, Kunio, Kariya-city Aichi 448-8661 (JP); Hashimoto, Koji, Kariya-city Aichi 448-8661 (JP); Maeda, Kazuto, Kariya-city Aichi 448-8661 (JP); Ikeda, Masatoshi, Nishio-city Aichi 445-0012 (JP); Hishinuma, Osamu, Nishio-city Aichi 445-0012 (JP)
(74) Representative: TBK-Patent

(57) **Abstract**

An exhaust gas recirculation device has a valve housing (1) provided with an exhaust gas circulation passage communicating with an exhaust gas passage of an internal combustion engine for recirculating a part of exhaust gas to an intake air passage. The device further comprises a flow volume control valve (2 to 4) provided with a valve (3) accommodated movably in the valve housing (1) to change an opening degree of the exhaust gas circulation passage (15), and a power unit (5 to 8) for rotatably driving the flow volume control valve. The power unit (5 to 8) causes the valve (3) of the flow volume control valve (2 to 4) to execute an opening and closing swing operation so as to pass through the fully closed valve position by a given flap opening degree during a given period just after the internal combustion engine is turned off or just before the internal combustion engine is turned on.

## Description

The present invention relates to an exhaust gas recirculation device for recirculating a part of exhaust gas to an intake passage of an intake pipe for an internal combustion engine, in particular, applicable to a flow volume control valve of the exhaust gas recirculation device for adjusting flow volume of the exhaust gas to be mixed with air of the intake passage.

Conventionally, the exhaust gas recirculation device is known in which a part of exhaust gas (EGR gas) flowing in an exhaust pipe is mixed with intake air flowing in an intake pipe, which causes lower maximum combustion temperature so that harmful material (for example, nitrogen oxide) to be contained in the exhaust gas is reduced. Since the exhaust gas recirculation adversely affects on output and drivability of the internal combustion engine, it is necessary to adjust volume of EGR gas (EGR volume) that circulates into the intake pipe.

To this end, the exhaust gas recirculation device has a flow volume control valve (EGR control valve) for adjusting flap opening degree or flow area of an exhaust gas circulation passage formed in an exhaust gas circulation pipe. WO01/07808 A1 or WO00/06885 A1 discloses an exhaust gas recirculation device in which a valve shaft, operative together with a valve of EGR control valve, is reciprocatingly driven by a power unit composed of a drive motor and a speed reduction mechanism. An exhaust gas circulation passage is formed in an exhaust gas circulation pipe for mixing EGR gas, a part of exhaust flowing in an exhaust pipe for an internal combustion engine, with air flowing in an intake pipe. The valve is accommodated in the exhaust gas circulation passage so as to be able to move within a range from a fully opened valve position to a fully closed valve position.

With the exhaust gas recirculation device, a flap opening degree of EGR control valve or an opening degree or area of the exhaust gas circulation passage is linearly adjusted so that intake air to be sucked into each cylinder of the internal combustion engine is mixed with EGR gas whose volume, EGR volume, is predetermined according to operating conditions or situations of the internal combustion engine to reduce harmful components of the exhaust gas.

The conventional exhaust gas recirculation device has a drawback in that combustion products such as oxide or carbide contained in EGR gas are likely to be deposited in or adhered to a portion of the exhaust gas circulation passage formed in a cylindrical nozzle fitted to the valve housing where EGR gas is likely stagnant. In particular, when deposits of the combustion products are stuck to a circumferential periphery of the valve of EGR control valve and/or an inner wall of the nozzle near the valve, the valve and the nozzle are adhered or fixed to each other so that, when the internal combustion engine is turned off, the valve of EGR valve is hardly moved from the fully closed valve position, which prevents EGR gas from being introduced into the intake pipe to mix with intake air.

Further, at a cold weather time in winter, when the internal combustion engine is stopped immediately after having cruised the vehicle at an engine high speed, there occurs a dead soak phenomenon in which temperature in an engine room increases remarkably before decreasing to atmospheric temperature (for example, less than 0 °C). Due to the deposits stuck between the circumferential periphery of the valve and the inner wall of the nozzle, the valve is adhered more firmly to the nozzle, since the deposits are exposed to repeated heat cycle between relatively high and low temperature conditions has more increased adhesive force. In particular, in case of the power unit whose drive force for moving the valve is relatively small, it is difficult to move the valve of EGR valve at the fully closed valve position away from the nozzle.

Further, when the deposits stick to a ring shaped space formed between an outer circumference of the valve shaft and an inner wall of the shaft hole into which the valve shaft is inserted, the deposits give a resistance to the valve at the fully closed valve position on moving apart from the nozzle. Furthermore, when the deposits stick to a space between a seal ring, which seals a gap between an circumferential periphery of the seal ring and an inner wall of the nozzle, and a ring shaped groove into which the seal ring is accommodated, the deposits prevents the seal ring from smoothly moving, which gives a resistance to the valve at the fully closed position on moving apart from the nozzle toward the fully opened valve position.

An object of the present invention is to provide an exhaust gas recirculation device in which a valve of EGR valve can be moved easily (with less power) from a fully closed valve position toward a fully opened valve position, even if combustion products deposit on a circumferential periphery of the valve.

It is an aspect of the present invention to provide an exhaust gas recirculation device in which, even if combustion products deposit on a circumferential periphery of the valve and/or an inner wall of the nozzle in a vicinity of the fully closed valve position, the combustion products can be easily removed therefrom.

To achieve the above object, in an exhaust gas recirculation device having a valve housing provided with an exhaust gas circulation passage communicating with an exhaust gas passage of an internal combustion engine for recirculating a part of exhaust gas to an intake air passage, a flow volume control valve provided with a valve accommodated movably in the valve housing to change an opening degree of the exhaust gas circulation passage, and a power unit for rotatably driving the flow volume control valve, it is **characterized in that**, when or after an internal combustion engine is turned off, the power unit causes the valve of the flow volume control valve (EGR valve) to hold at a rest position where the valve is opened by a given flap opening degree from a fully closed valve position.

The rest position is a position where the valve is opened in a valve closing direction or in a valve opening direction by the given flap opening degree from the fully closed valve position.

With the device mentioned above, the valve hardly stick to an inner wall of the valve housing, since the valve is opened by the given flap opening degree without resting at the fully closed valve position when or after the internal combustion engine is turned off. Accordingly, when the internal combustion engine starts, the valve can be easily moved from the fully closed valve position toward the fully opened valve position so that the flap opening degree of the valve for adjusting a volume (EGR volume) of EGR gas to be mixed with intake air flowing in an intake pipe may be accurately controlled, resulting in lowering maximum combustion temperature so that harmful material (for example, nitrogen oxide) contained in the exhaust gas may be reduced.

It is preferable that the flow volume control valve has a valve shaft operative together with the valve and the power unit has a drive motor provided with a motor shaft from which driving force of the drive motor generates and a power transmission mechanism (or speed reduction gear mechanism) through which the driving force of the drive motor is transmitted to the valve shaft (at a predetermined speed reduction ratio).

The speed reduction gear mechanism is effective for moving the valve with relatively larger driving force without enlarging a body of the drive motor.

Preferably, the valve of the flow volume control valve is provided along a circumferential periphery thereof with a sealing member for preventing exhaust gas leakage through a clearance between the exhaust gas circulation passage and the valve when the valve is at the fully closed valve position.

Further, in the exhaust gas recirculation device mentioned above, it is **characterized in that** the power unit causes the valve of the flow volume control valve to swing so as to pass through the fully closed valve position by a given flap opening degree during a given period just after the internal combustion engine is turned off or just before the internal combustion engine is turned on.

With the device mentioned above, the combustion products deposited on a circumferential periphery of the valve and an inner wall of the exhaust gas circulation passage in a vicinity of the fully closed valve position may be easily removed. Accordingly, when the internal combustion engine starts (is turned on), the valve can be easily operated from the fully closed valve position toward the fully opened valve position so that the flap opening degree of the valve for adjusting a volume (EGR volume) of EGR gas to be mixed with intake air flowing in an intake pipe may be accurately controlled, resulting in lowering maximum combustion temperature so that harmful material (for example, nitrogen oxide) contained in the exhaust gas may be reduced.

The given period may be set so as to expire when the opening and closing swing operation passing through the fully closed valve position has been repeated by a predetermined plural times or to expire when operating current to be supplied to the drive motor has become below a predetermined value.

It is more preferable that the swing operation passing through the fully closed valve position is executed just before the internal combustion engine is turned on, since the combustion products deposited are relatively hard and fragile because of relatively low temperature so that the combustion products may be more easily removed.

Further, in case that the swinging operation passing through the fully closed valve position terminates when operating current to be supplied to the drive motor has become below the predetermined value, power consumption of a battery is smaller at a time when the engine is off and an alternator of the vehicle is not operative for charging current to the battery, resulting in securing a longer life of the battery.

In the exhaust gas recirculation device mentioned above, it is characterized that the valve housing is provided around the exhaust gas circulation passage or in a vicinity of the valve at the fully closed valve position with a coolant circulation conduit through which engine coolant circulates.

Preferably, the engine coolant is forcibly circulated by an electric pump during a given period just after the internal combustion engine is turned off. The given period may be a period until lapse of a predetermined time or termination of dead soak after turning off the internal combustion engine.

Since adhesive force of the deposits more increases as a difference between high temperature and low temperature is larger, the coolant circulation conduit serves to restrict temperature increase or decrease of the deposits and to make the difference between high temperature and low temperature relatively small so that the valve is hardly stuck or fixed to the valve housing when the valve is at the fully closed valve position.

In the exhaust gas recirculation device mentioned above, when a motor housing and/or a gear case is formed integrally with the valve housing and positioned in a vicinity of the exhaust gas circulation passage and the drive motor and/or the speed reduction gear mechanism is accommodated in and fixed to the motor housing, it is preferable that a heat insulating means is provided in the valve housing, the motor housing and/or the gear case for insulating heat to be transmitted between the exhaust gas circulation passage and the drive motor and/or the gear case. The heat insulating means serves to prevent driving force reduction of the drive motor and/or deformation of gears, typically made of resin, due to higher temperature.

The heat insulating means may be a coolant circulation conduit through which engine coolant circulates, an air gap layer into which atmosphere is introduced, or a boundary portion of the valve housing and the motor housing whose cross sectional area is smaller than that of the other portion of the valve housing or the motor housing existing between the exhaust gas circulation passage and the drive motor.

Moreover, it is preferable that, in the exhaust gas recirculation device mentioned above, the valve shaft on an axial end side thereof is partly supported rotatably by a bearing fixed in the valve housing. In more details, the valve housing has a shaft hole in which the bearing is press fitted and the valve shaft extends through the bearing toward the exhaust gas circulation passage. Since the bearing supports one axial end side of the valve shaft, an area on which the combustion products deposit is relatively limited so that adhesive force of the valve to the valve housing at the fully closed valve position is relatively small.

It is preferable that a lubricant is disposed in a clearance between an outer surface of the valve shaft and an inner wall of the shaft hole at a position between the exhaust gas circulation passage and the bearing. The lubricant serves to prevent deposition of the combustion products on the clearance so that movement of the valve is smooth.

In case that the valve is provided at a circumferential periphery thereof with a ring shaped holding groove and a seal ring held by the holding groove for coming in slidable contact with an inner wall of the valve housing, preferably, a lubricant is disposed in a clearance between the holding groove and the seal ring. The lubricant serves to prevent deposition of the combustion products on the clearance so that movement of the seal ring in the holding groove is smooth, which results in preventing EGR gas leakage when the valve is at the fully closed valve position.

The lubricant is, preferably, a solid or gelled lubricating material whose main ingredient is powdered molybdenum disulfide, graphite, graphite grease or fiber grease.

Other features and advantages of the present invention will be appreciated, as well as methods of operation and the function of the related parts, from a study of the following detailed description, the appended claims, and the drawings, all of which form a part of this application. In the drawings:
Fig. 1 is a cross sectional view of an entire body of an exhaust gas recirculation device according to a first embodiment;
Fig. 2 is an enlarged cross sectional view of a part of the exhaust gas recirculation device shown in Fig. 1;
Fig. 3 is a graph showing a relationship between a flap opening degree of EGR valve and EGR volume according to the first embodiment;
Fig. 4 is a timing chart showing a change of an output of EGR volume sensor according to the first embodiment;
Fig. 5 is a timing chart showing a change of an operation current to a drive motor when an engine is turned off according to the first embodiment;
Fig. 6 is a cross sectional view taken along a line VI -VI of Fig. 1;
Fig. 7 is a cross sectional view of an entire body of an exhaust gas recirculation device according to a second embodiment;
Fig. 8 is a cross sectional view taken along a lines VIII -VIII of Fig. 7;
Fig. 9 is a front view of an entire body of an exhaust gas recirculation device according to a third embodiment;
Fig. 10 is a cross sectional view of an entire body of an exhaust gas recirculation device according to a fourth embodiment;
Fig. 11 is a cross sectional view of a main part of an exhaust gas recirculation device according to a fifth embodiment; and
Fig. 12 is a cross sectional view of a main part of an exhaust gas recirculation device according to a sixth embodiment.

### (First embodiment)

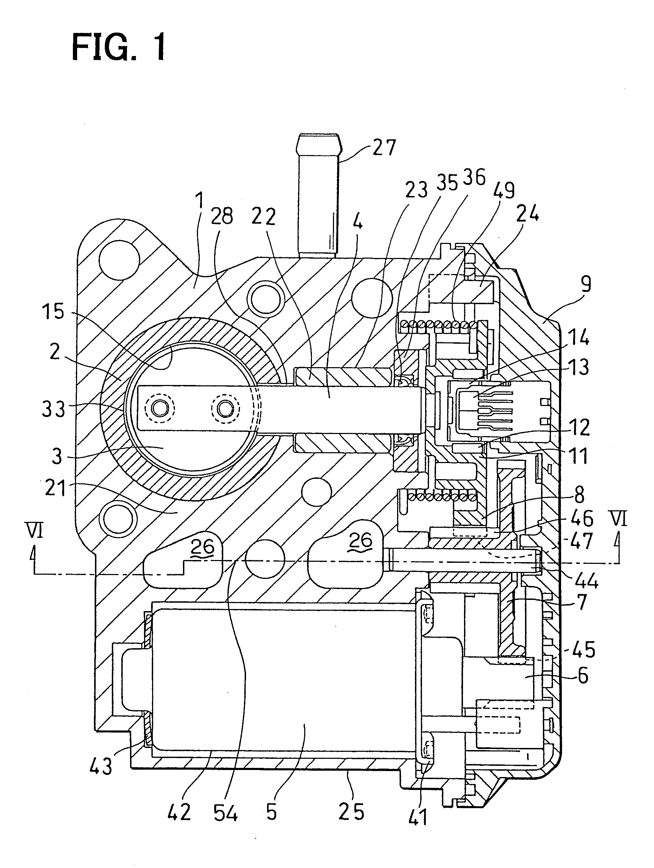

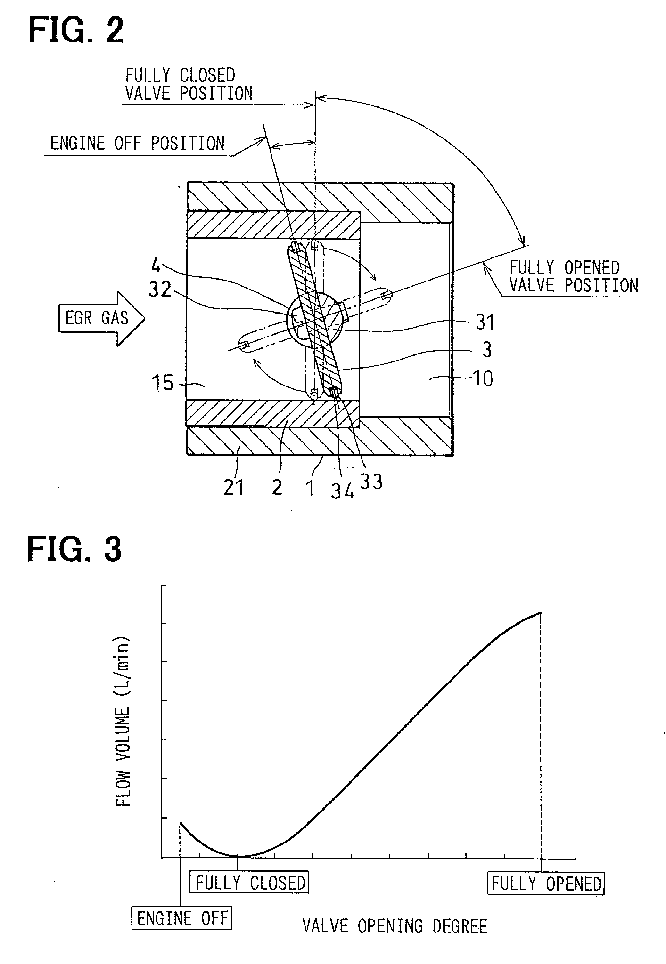

Figs. 1 to 6 show a first embodiment of the present invention. Fig. 1 shows an entire structure of an exhaust gas recirculation device. Fig. 2 shows a main part of the exhaust gas recirculation device.

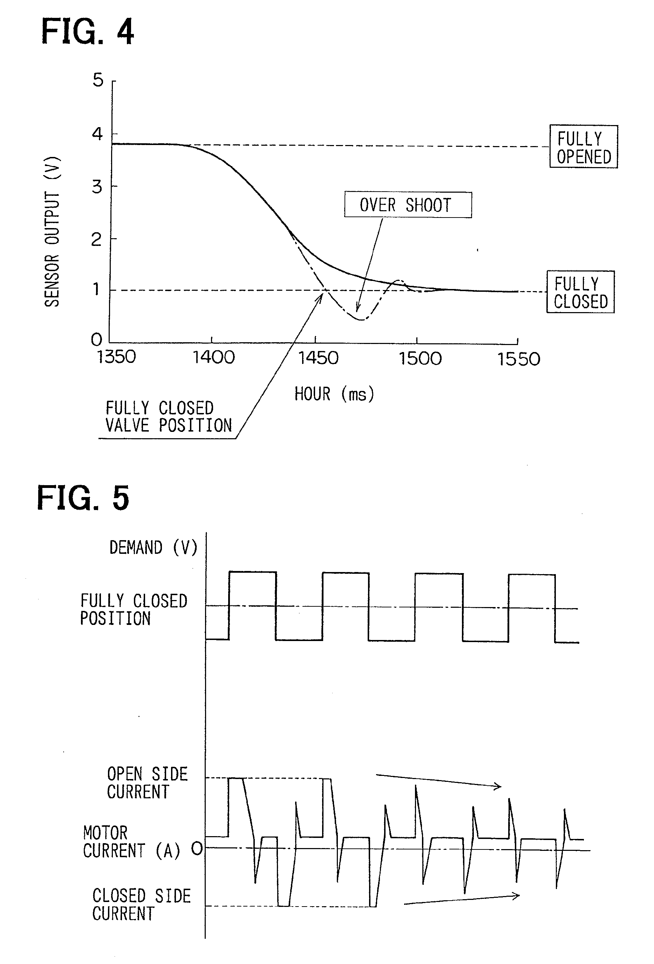

The exhaust gas recirculation device according to the first embodiment is composed of a valve housing 1 constituting a part of an exhaust gas recirculation pipe connected to an exhaust pipe of an internal combustion engine for recirculating a part of exhaust gas (EGR gas), a flow volume control valve (EGR control valve) having a cylindrical nozzle 2 fitted to an inner passage 10 formed in the valve housing 1 and connected to the exhaust gas recirculation pipe, a valve 3 accommodated in the nozzle 2 for opening and shutting the nozzle 2, and a valve shaft 4 rotatable together with the nozzle 2, a power unit having a drive motor 5 for rotatably driving the valve shaft 4 and a power transmission mechanism for transmitting rotation of the drive motor 5 to the valve shaft 4 of EGR control valve, and an engine control unit (ECU) for electrically controlling the drive motor 5 of the power unit. The exhaust gas recirculation device further has EGR volume sensor (refer to Fig. 4) in which a flap opening degree of the valve 3 of EGR control valve, which represents volume of EGR gas to be mixed with intake air flowing in an intake pipe, that is, an exhaust gas recirculation volume (EGR volume) to the intake pipe, is converted into an electric signal to be output to ECU.

As shown in Fig. 4, EGR volume sensor generates an upper limit voltage value (for example, 4 V) when the flap opening degree of the valve 3 of the EGR control valve is at a fully opened valve position (maximum flap opening degree, maximum lift amount) and a lower limit voltage value (for example, 1 V) when the flap opening degree of the valve 3 of the EGR control valve is at a fully closed valve position (minimum flap opening degree, minimum lift amount). EGR volume sensor is composed of a rotor 11 which is made of metal material such as iron (magnetic material), which is fixed to an axial end of the valve shaft 4 (on right side thereof in Fig. 1) and the cross section of which is formed in shape of one side opened square, split type (roughly square shaped) permanent magnets 12 forproducingmagnetic field, split type (roughly are shaped) yokes (magnetic body, not shown) to be magnetized by the permanent magnets 12, a plurality of hall elements 13 arranged integrally with and on a sensor cover 9 so as to be opposed to the permanent magnets 12, terminals (not shown) formed of thin conductive metal plate through which the hall elements 13 are electrically connected with outside ECU, and a stator 14 made of metal material such as iron (magnetic material) for concentrating magnetic flux to hall elements 13.

The permanent magnets 12 and yokes are fixed with glue to inner circumference of the rotor 11, which is formed by insert molding with a valve side speed reduction gear 8, one of components of the power transmission mechanism. The split type permanent magnets 12, each cross section of which is formed in shape of square, are magnetized in upper and lower directions in Fig. 1 with one of N and S poles on upper side and the other of N and S poles on lower side (in Fig. 1, each upper side of which is N pole and each lower side is S pole). The hall elements 13, which are contactless detecting elements, are arranged so as to be opposed to inner circumferences of the permanent magnets 12 and, when magnetic field of N pole or S pole is produced on sensitive surfaces thereof, generate electromotive force responsive to the magnetic field (when N pole magnetic field is produced, positive electric potential and, when S pole magnetic field is produced, negative electric potential).

The valve housing 1, which holds the valve 3 rotatably over a range from the fully opened valve position to the fully closed valve position in the exhaust gas recirculation passage 15 formed inside the nozzle 2, is fixed by fasteners such as bolts to the exhaust gas recirculation pipe or the intake pipe for the engine. The valve housing 1 is integrally provided with a nozzle fitting portion 21 having the inner passage 10 to which the cylindrical nozzle 2 for rotatably holding the valve 3 is fitted. As shown in Fig. 2, the inner passage 10 of the nozzle fitting portion 21 is provided at inner circumference thereof with a step portion. Inner diameter of the inner passage 10 of the nozzle fitting portion 21 on left side of the step portion is larger that that on right side of the step portion. The valve housing 1 further has a shaft bearing hole 23 communicating with a shaft hole 28 formed in the nozzle fitting portion 21 and the nozzle 22. The shaft bearing hole 23 accommodates a metal bearing 22 which rotatably holds the right side portion of the valve shaft 4.

The valve housing 1, which is exposed to severe thermal surroundings, is made of heat-resistance material such as stainless steel that can resist high temperature. The nozzle 2 is formed in cylindrical shape and, like the valve housing 1, made of heat-resistance material such as stainless steel that can resist high temperature. The metal bearing 22 is formed in cylindrical shape and made of material such as Ni-Cu-C. The valve housing 1 is integrally provided on an outer wall thereof on right side of the nozzle fitting portion 21 and the shaft bearing hole 23 in Fig. 1 with a gear case 24 formed in shape of recess for rotatably accommodating the power transmission mechanism of the power unit.

The valve housing 1 is integrally provided on an outer wall thereof on lower side of the nozzle fitting portion 21 and the shaft bearing hole 23 in Fig. 1 with a motor housing 25 which is formed in shape of recess for accommodating the drive motor 5 of the power unit. The valve housing 1 is further provided between the nozzle fitting portion 21 and the motor housing 25 and/or the gear case 24 with air gaps or space that serve as a heat insulating layer 26 (heat insulating means 26) for insulating heat of EGR gas to be transmitted toward the motor housing 25 and/or the gear case 24 from the exhaust gas circulation passage 15 or the inner passage 10.

In addition to or instead of the air gaps or spaces as the heat insulating layer 26, the valve housing 1 may have a coolant recirculation conduit (not shown) arranged between the nozzle fitting portion 21 and the motor housing 25 and/or the gear case 24, which serves as the heat insulating means 26. For this purpose, the valve housing 1 may be provided with a coolant inlet pipe from which engine coolant flows into the coolant circulation conduit 27 and with a coolant outlet pipe (not shown) from which the engine coolant in the coolant circulation conduit flows out.

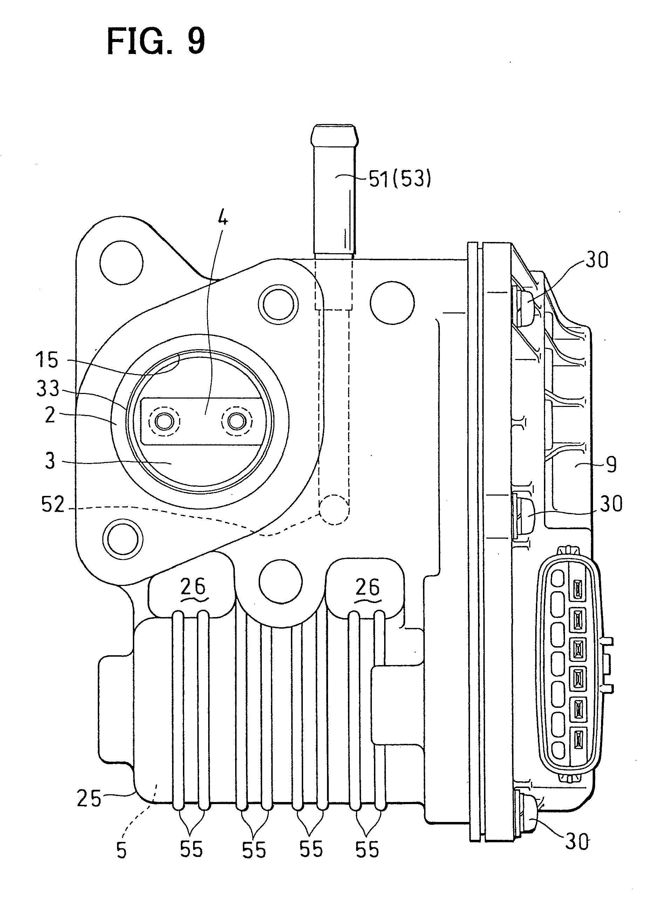

A sensor cover 9 for covering the opening side of the gear case 24 is attached to the valve housing 1 on opening side of the gear case 24 (on opening side of the motor housing 25). The sensor cover 9 is made of heat plastic material for insulating conduction between terminals of the EGR volume sensor. The sensor cover 9, whose fitting end surface comes in contact with a fitting end surface provided in the gear case 24 or the motor housing 25 on opening side thereof, is airtightly fixed by rivets (not shown) or screws (refer to screws 30 in Fig. 9) to the fitting end surface of the gear case 24.

As mentioned above, the EGR control valve is composed of the cylindrical nozzle 2 fixed to the inner passage 10 of the nozzle fitting portion 21 of the valve housing 1, the valve 3 accommodated in the nozzle 2 so as to swing or pivot within a given angular range covering the fully opened valve position and fully closed valve position for adjusting the flap opening degree or the opening area of the exhaust gas circulation passage 12 formed in the nozzle 3, and the valve shaft 4 rotatable together with the valve 3.

The valve 3 is a butterfly type rotary valve (flap valve) formed roughly in shape of a disk and made of heat-resistance material such as stainless steel that can resist high temperature. The valve 3 is fastened to a valve installation portion 31 of the valve shaft 4 by a plurality of fasteners 32 such as screws or bolts. The valve 3 is provided on outer circumference thereof with a ring shaped holding groove 34 by which a seal ring 33 (sealing material) is held. The seal ring 33 comes in slidable contact with an inner wall of the nozzle 2 at or in a vicinity of the fully closed valve position. The seal ring 33 is formed in shape of a ring and, similarly to the valve 3, made of heat-resistance material such as stainless steel that can resist high temperature.

The valve shaft 4, which is made of heat-resistance material such as stainless steel that can resist high temperature, has the valve installation portion 31 whose cross section is formed in semicircular shape and to which the valve 3 is fixed. The valve shaft 4 is rotatably held by the bearing 22 press fitted in the valve bearing hole 23. The valve shaft 4 is provided at an axial right end thereof in Fig. 1 with a staking portion to which the valve side gear 8, one component of the power transmission mechanism and the rotor 11, one component of the EGR volume sensor is fixed by staking or crimping. An oil seal 35 and a ring shaped stopper 36 for holding the oil seal 35 are disposed in a gap between an inner wall of the shaft bearing hole 23 and an outer circumference of the valve shaft 4 on right side of the bearing 22 in Fig. 1.

The power unit is composed of the drive motor 5 for rotating the valve shaft 4 and the power transmission mechanism (a speed reduction gear mechanism in this embodiment) for transmitting a rotating force of the drive motor 5 to the valve shaft 4. The drive motor 5 is connected in circuit with motor terminals embedded in the gear case 24 and the sensor cover 9 and, when current is applied to the motor terminals, is operated. The drive motor 5 is composed of a metal front frame 41, a cylindrical yoke 42, a plurality of permanent magnets (not shown), a motor shaft (not shown), an armature core, an armature coil and so on.

The drive motor 5 is a motor actuator (direct current motor) in which the motor shaft rotates when current is applied thereto through two pieces motor current terminals (not shown) embedded in and held by the sensor cover 9, two pieces motor connection terminals (not shown) connected to the motor current terminals and protruding toward the drive motor 5 and two pieces motor current supply terminals (not shown) connected detachably to the motor connection terminals.

According to the embodiment mentioned above, a value of the current to the drive motor 5 is feedback controlled in order for a demand EGR volume (target flap opening degree) designated by ECU to coincide substantially with a detection EGR volume (actual flap opening degree) detected by the EGR volume sensor. It is preferable that the value of the current to the drive motor 5 is duty controlled, as shown in Fig. 5. An on/off ratio of a control pulse signal per unit time (current conductive ratio, that is, duty ratio) is adjusted to vary the flap opening degree of the valve 3 of EGR control valve according to difference (deviation) between the demand EGR volume and the detection EGR volume.

The front frame 41 is fastened and fixed to an opening side end face of the motor housing 25 by fasteners such as bolts and screws. Plural front side end portions of the yoke 42 are fixed to the front frame 41 by staking or crimping. A wave washer 43 is disposed between an end surface of the yoke 42 and a bottom inner surface of the motor housing 25. The wave washer 43 is a circumferentially waved resilient ring member that is resiliently deformable in an axial direction of the motor shaft and generates a biasing force of urging the drive motor 5 in a right direction in Fig. 1 (biasing force of pushing the motor 5 toward the front frame 41).

The speed reduction gear mechanism has a pinion gear 6 fixed to an outer circumstance of the motor shaft of the drive motor 5, a speed reduction middle gear 7 rotatable and in mesh with the pinion gear 6, and a valve side gear 8 rotatable and in mesh with the speed reduction middle gear 7. The speed reduction gear mechanism, which causes to reduce a rotational speed of the motor shaft of the drive motor at a given reduction ratio, is a valve drive member for driving rotationally the valve shaft 4 of EGR control valve. The pinion gear 6, which is made of metal and formed in a given shape, is a motor side gear rotatable together with the motor shaft of the drive motor 5.

The speed reduction middle gear 7, which is made of resin and formed in a given shape, is rotatably fitted to an outer circumstance of a holding shaft 44 that serves as a rotation center. The speed reduction middle gear 7 is composed of a large diameter gear 45 in mesh with the pinion gear 6 and a small diameter gear 46 in mesh with the valve side gear 8. The pinion gear 6 and the speed reduction middle gear 7 serve as a torque transmission means for transmitting torque of the drive motor 5 to the valve side gear 8. An axial end portion (right end portion in Fig. 1) of the holding shaft 44 is fitted to a recess formed in an inner wall of the sensor cover 9. The other axial end portion of the holding shaft 44 is press fitted to a recess formed in a bottom wall of the gear case 24.

The valve side gear 8, which is made of resin and formed roughly in shape of a ring, is integrally provided on an outer circumference thereof with a gear 47 in mesh with the small diameter gear 46 of the speed reduction middle gear 7. A return spring 49 is disposed between the bottom wall of the gear case 24 and a left end (in Fig. 1) of the valve side gear 8. The rotor 11, made of metal such as iron (magnetic material), is fixed by insert molding to an inner wall of the valve side gear 8.

An operation of the exhaust gas recirculation device is described with reference to Fig. 1 and 2.

When an intake valve provided in an intake port of an engine cylinder head is opened upon cranking an engine such as a diesel engine, intake air filtered through an air cleaner is delivered to each intake manifold of engine cylinder via an intake pipe and a throttle body and supplied to the engine cylinder. The air in the engine cylinder is compressed to an extent that its temperature increases to temperature higher than fuel combustion temperature and, then, fuel injected into the engine cylinder burns. Combustion gas in the engine cylinder is exhausted from an exhaust port of the cylinder head and ejected through an exhaust manifold and the exhaust pipe. As shown in an characteristic diagram in Fig. 3, the drive motor 5 is energized by ECU and the motor shaft of the drive motor 5 rotates to attain a given flap opening degree of the valve 3 of EGR control valve.

The rotation of the motor shaft causes the pinion gear 6 to rotate and torque of the drive motor 5 is transmitted to the large diameter gear 45 of the speed reduction middle gear 7. According to rotation of the large diameter gear 45, the small diameter gear 46 rotates about an axis of the holding shaft 44 and the valve side gear 8, which has the gear 47 in mesh with the small diameter gear 46, rotates. The rotation of the valve side gear 8 causes the valve shaft 4 to rotate by a given angle so that, as shown in Fig. 2, the valve 3 of EGR control valve is driven from the fully closed valve position in an opening direction toward the fully opened valve position. Then, a part of the exhaust gas is flowed as EGR gas into the exhaust gas circulation passage 15 of the nozzle 2 within the valve housing 1 via the exhaust gas circulation pipe. The EGR gas in the exhaust gas circulation passage 15 flows into the intake air passage of the intake pipe so that EGR gas is mixed with the intake air from the air cleaner.

EGR volume of EGR gas is feed back controlled to keep a given value in use of detection signals from an intake air volume sensor (air flowmeter), an intake air temperature sensor and the EGR volume sensor. The intake air passing through the intake pipe to be sucked into each engine cylinder is mixed with EGR gas circulated into the intake pipe through the exhaust gas to reduce harmful emission. EGR volume of EGR gas is set in each engine operating condition by linearly controlling the flap opening degree of the valve 3 of EGR control valve.

In the exhaust gas recirculation device according to the first embodiment, the valve housing 1 is integrally provided on an outer wall thereof relatively in vicinity of the exhaust gas circulation passage 15 and the inner hole 10 with the motor housing 25 in which the drive motor 5 is accommodated and by which the drive motor 5 is rigidly held. Further, the valve housing 1 is integrally provided on an outer wall thereof with the gear case 24 in which the speed reduction middle gear 7 and the valve side gear 8, which are components of the speed reduction gear mechanism, are rotatably accommodated.

For example, in an electronically controlled throttle device, engine coolant circulates around a bore of a throttle body for preventing icing. However, in the exhaust gas recirculation device which is used under a temperature condition (typically 250 to 400°C) much higher than that (typically about 120 °C) of the electrically controlled throttle device, both interior of the gear case 24 and interior of the motor housing 25 are likely to become high temperature since heat of EGR gas passing through the exhaust gas circulation passage 15 provided within the nozzle 2 fitted in the valve housing 1 is transmitted toward the drive motor 5 and the speed reduction gear mechanism. Therefore, each of the speed reduction middle gear 7 and the valve side gear 8, which are made of resin, has a risk of deformation. Further, motor torque of the drive motor 5 is likely reduced.

For a purpose of restricting heat transmission of high temperature EGR gas from the exhaust gas circulation passage 15 toward the interiors of the gear case 24 and motor housing 25, the exhaust gas recirculation device according to the first embodiment has the heat insulating means such as air gap heat insulating layer 26 provided between the nozzle fitting portion 21 and the motor housing 25 and/or the gear case 24. The heat insulating means serves to prevent deformation of the speed reduction middle gear 7 and the valve side gear 8, both made of resin as well as motor torque reduction of the drive motor 5. The heat insulating means is not limited to the air gap heat insulating layer 26 but may be the coolant circulation conduit 27, through which engine coolant flows, arranged between the nozzle fitting portion 21 and the motor housing 25 and/or the gear case 24 for restricting heat transmission of EGR gas flowing the EGR gas circulation passage 15 toward the drive motor 5, the gear reduction middle gear 7 and/or the valve side gear 8.

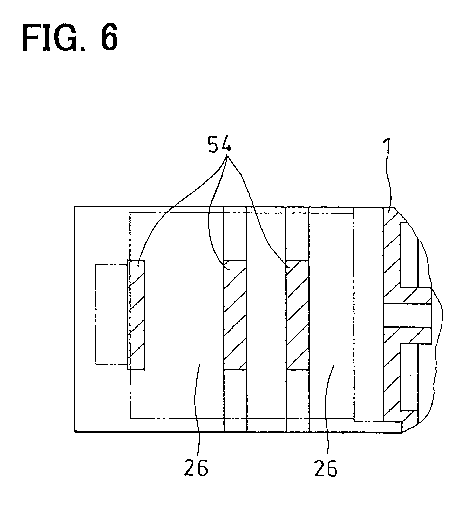

Further, as shown in Fig. 6, the heat insulating means may be a boundary portion 54 of the valve housing 1 and the motor housing 25 whose cross sectional area is smaller than that of the other portion of the valve housing 1 or the motor housing 25 existing between the exhaust gas circulation passage 15 and the drive motor 5. The smaller area boundary portion 54 serves to restrict heat transmission from the exhaust gas circulation passage 15 to the drive motor 5, resulting in preventing motor torque reduction of the drive motor 5.

According to the first embodiment, when the engine is turned off, the valve 3 of EGR control valve is moved in a valve closing direction and stopped at a position beyond the fully closed valve position by a given flap opening degree, as shown in Fig. 3. In case that the valve 3 rests at the fully closed valve position during a period when the engine is off, an entire outer circumference of the valve 3 comes in contact with an entire inner circumference of the nozzle 2 so that the valve 3 is likely to adhere to the nozzle 2 due to deposits attached thereto. However, as the valve 3 is opened by the flap opening degree, adhesion of the valve 3 to the nozzle 2 due to the depositions hardly occurs so that, on starting the engine, the valve 3 can be easily moved. Accordingly, the valve 3 of EGR control valve can be accurately controlled to a given flap opening degree so that necessary EGR volume of EGR gas may be mixed with air flowing in the intake pipe, which results in lowering the maximum combustion temperature to reduce harmful material (for example, nitrogen oxide) contained in the exhaust gas.

Further, the valve 3 of EGR valve may be controlled to execute an opening and closing swing operation so as to pass through the fully closed valve position by a given flap opening degree during a given period just after the engine is turned off or just before the engine is turned on. In this case, the combustion products deposited on a circumferential periphery of the valve 3 and an inner wall of the nozzle 2 (the exhaust gas circulation passage 15) in a vicinity of the fully closed valve position may be easily removed.

It is more preferable that the swinging operation passing through the fully closed valve position is executed just before the engine is turned on, since the combustion products deposited are relatively hard and fragile because of relatively low temperature so that the combustion products may be more easily removed.

It is known in the electronically controlled throttle device that, when the engine is turned off for parking or stopping the vehicle, the throttle valve is controlled to open by a given opening degree so that the throttle valve is prevented from locking within a bore of a throttle body due to icing and, even if the throttle valve has been locked, air can be sucked through a clearance between an circumferential periphery of the throttle valve and an inner wall of the bore of the throttle body, which enables the vehicle to move very slowly.

However, the icing is not a problem for the EGR control valve. The problem for the EGR control valve is that combustion products contained in EGR gas are deposited and the deposits prevent the valve 3 from smoothly moving from the fully closed valve position toward the fully opened valve position. Accordingly, the deposits are removed by sliding the ring shaped seal ring 33, which is supported by the holding groove 34 formed at the outer circumference of the valve 3, on the inner wall of the nozzle 2 when the valve 3 is in a vicinity of the fully closed valve position in such a manner that the valve 3 overshoots or swings beyond the fully closed valve position by a given flap opening degree, as shown by a dot/slash line in the timing chart of Fig. 4.

This opening and closing swing operation beyond the fully closed valve position may be repeated by a predetermined time just after the engine is turned off or just before the engine is turned on.

On the other hand, as shown in Fig. 5, the opening and closing swing operation beyond the fully closed valve position may be repeated until operating current (max current value on a valve closing or opening side) to be supplied to the drive motor 5 becomes below a predetermined value. In this case, power consumption of a battery is smaller at a time when the engine is off and an alternator of the vehicle is not operative for charging current to the battery, resulting in securing a longer life of the battery.

It is more preferable that the swing operation passing through the fully closed valve position is executed just before the internal combustion engine is turned on, since the combustion products deposited are relatively hard and fragile because of relatively low temperature so that the combustion products may be more easily removed.

Further, the power unit has a drive motor 5 provided with a motor shaft from which driving force of the drive motor 5 generates and a speed reduction gear mechanism through which the driving force of the drive motor 5 is transmitted to the valve shaft 4 at a predetermined speed reduction ratio. Accordingly, even if the deposits are relatively hard just before the engine is turned on, the deposits can be easily removed since relatively larger driving force of moving the valve 5 is obtained without enlarging a body of the drive motor 5.

Further, if the deposits are stuck to a clearance between the valve shaft 4 and the shaft hole 28 into which the valve shaft 4 is inserted, there may occur a problem that the valve shaft 4 is locked or frictional resistance of the valve shaft 4 is higher. To cope with this problem, the valve shaft 4 extends toward the exhaust gas circulation passage 15 through the shaft hole 28 provided in the nozzle fitting portion 21 and the nozzle 2 in such a manner that only an axial end side of the valve shaft 4 is supported by the bearing 22 press fitted in the bearing fitting hole 23. Accordingly, an area of a portion or clearance to which the deposits are adhered is relatively small so that the valve 3 is hardly stuck to the nozzle 2.

### (Second embodiment)

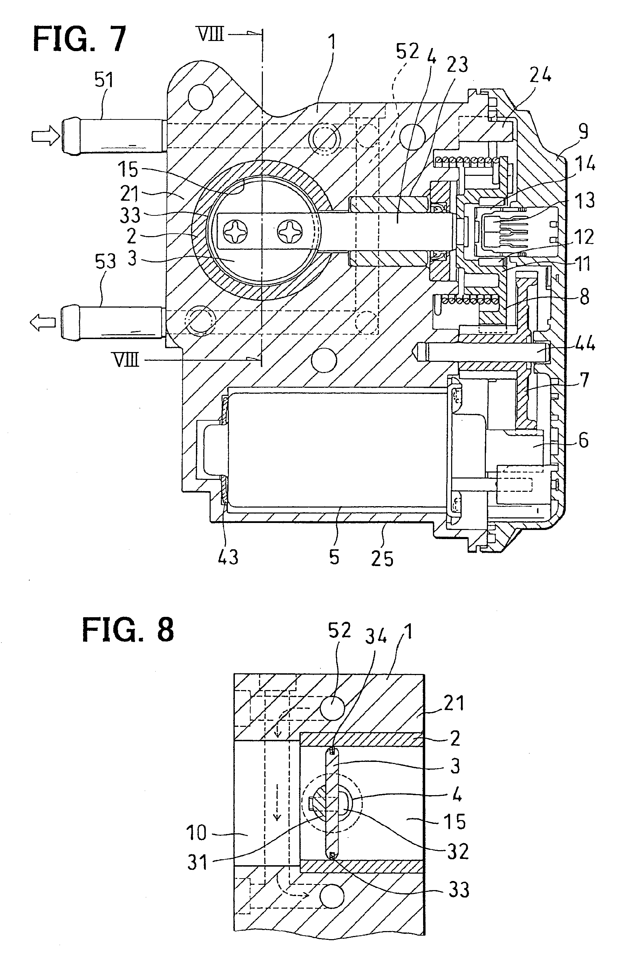

An exhaust gas recirculation device according to a second embodiment is described with reference to Figs. 7 and 8.

The adhesive force of the deposits increases as the deposits are repeatedly exposed to high and low temperature and the difference between the high and low temperature is larger. The exhaust gas recirculation device according to the second embodiment has a coolant circulation conduit 52 in which engine coolant circulates around the nozzle fitting portion 21 of the valve housing 1 in which the nozzle 2 is fitted. The valve 3 of EGR valve is movably accommodated in the nozzle 2 to open and close the exhaust gas circulation passage 15. That is, the coolant circulation conduit 52 is positioned around the exhaust gas circulation passage 15 or in a vicinity of the valve 3 at the fully closed valve position.

As shown in Fig. 7, a coolant inlet pipe 51 from which engine coolant flows in and a coolant outlet pipe 53 from which the coolant flows out are connected to the coolant circulation conduit 52. Since the coolant circulates around the valve 3 of EGR valve and serves to prevent temperature of the deposits adhered to the circumferential periphery of the valve 3 or the inner wall of the nozzle 2 from increasing to relatively high temperature or decreasing to relatively low temperature. Accordingly, the adhesive force of the deposit is relatively weak so that, even if the valve 3 is at the fully closed valve position, the valve 3 is hardly stuck to the nozzle 2.

### (Third embodiment)

An exhaust gas recirculation device according to a third embodiment is described with reference to Fig. 9.

In the exhaust gas recirculation device according to the third embodiment, the motor housing 24, in which the drive motor 5 is accommodated and fixed, is integrally provided on outer surface thereof with a plurality of heat radiation ribs. The heat radiation ribs serve not only to promote heat radiation of EGR gas flowing in the exhaust gas circulation passage 15 in the nozzle but also to prevent temperature increase of the drive motor 5, which results in suppressing torque reduction of the drive motor 5.

### (Fourth embodiment)

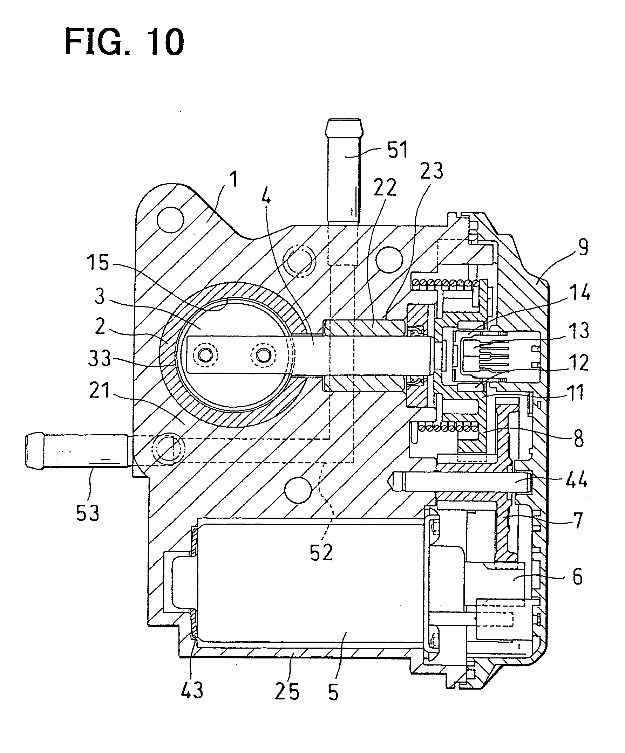

An exhaust gas recirculation device according to a fourth embodiment is described with reference to Fig. 10.

The exhaust gas recirculation device according to the fourth embodiment has not only the coolant circulation conduit 52, the coolant inlet pipe 51 and the coolant outlet pipe 53, which are similar to those of the second embodiment, but also an electric pump (not shown) for causing the engine coolant (for example, 75 to 80 °C) to forcibly circulate in the coolant circulation passage 52. As the exhaust gas recirculation device is installed in an engine room where an engine cooling device for cooling the engine is also installed, a pump for the engine cooling device is applicable to the electric pump for the exhaust gas recirculation device.

The electric pump serves to circulate the engine coolant in the coolant circulation conduit 52 not only when the engine turned on but also during a given time or until a given condition is satisfied after the engine is turned off. For example, after the engine is turned off, temperature of the deposits is likely to once increase to high temperature due to dead soak and, then, decreases to low temperature. Since repetition of high and low temperature causes higher adhesive force of the deposits, if the electric pump is operates until the dead soak terminates just after the engine is turned off in order to prevent temperature increase of the deposits adhered to outer circumference of the valve 3, stick of the valve 3 to the nozzle 2 at the fully closed valve position can be suppressed.

### (Fifth embodiment)

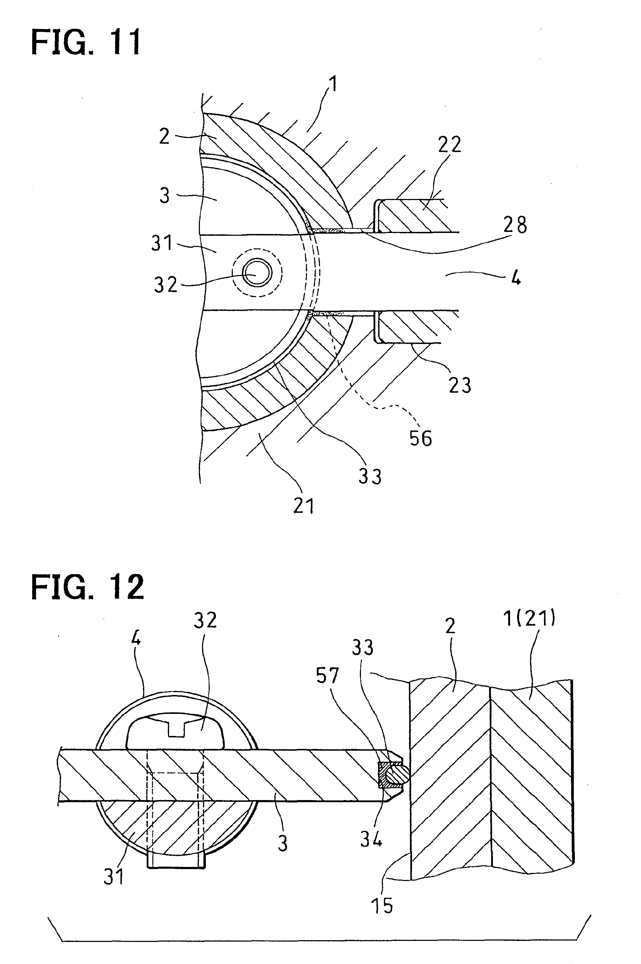

An exhaust gas recirculation device according to a fifth embodiment is described with reference to Fig. 11.

In the exhaust gas recirculation device according to the fifth embodiment, a clearance between the valve shaft 4 and the shaft hole 28 of EGR valve is smaller for a purpose of preventing leakage of EGR gas when the valve 3 is at the fully closed valve position.

Since the valve shaft 4, the nozzle 2 and the nozzle fitting portion 21 are made of stainless steel, slidability of the valve shaft 4 in the shaft hole 28 is not so high. Therefore, lubricant 56, which has good lubricating characteristic and heat resistance, is disposed in a ring shaped clearance between an outer surface of the valve shaft 4 and an inner wall of the shaft hole 28 at a position between the exhaust gas circulation passage 15 and the bearing 22. The lubricant 56 serves to prevent deposition of the combustion products on the clearance so that movement of the valve 3 is smooth.

Further, the lubricant 56 serves not only to move the valve shaft 4 in the shaft hole 28 with less frictional resistance but also to reduce leakage of EGR gas through the ring shaped clearance so that an opening and closing operation of the valve 3 is accurate.

The lubricant 56 is, preferably, a solid or gelled lubricating material whose main ingredient is powdered molybdenum disulfide, graphite, graphite grease or fiber grease so that life of the lubricant 56 is longer. If the lubricant 56 is liquid material, there is a risk that the lubricant 56 is ejected from the ring shaped clearance by pressure of EGR gas.

### (Sixth embodiment)

An exhaust gas recirculation device according to a sixth embodiment is described with reference to Fig. 12.

The exhaust gas recirculation device according to the sixth embodiment has a lubricant 57 disposed in a gap between the seal ring 33 and the holding groove 34 in which the seal ring is held. The lubricant 57 has a good lubricating characteristic and serves to prevent deposition of the combustion products on the gap between the seal ring 33 and the holding groove 34.

Accordingly, operation failure of the seal ring 33 due to the deposition adhered to the gap or increased frictional resistance between the seal ring 33 and the holding groove 34 is prevented so that EGR gas hardly leaks from a clearance between the seal ring 33 and the inner wall of the nozzle 2 when the valve 3 is at the fully closed valve position. The lubricant 57 is, preferably, a solid or gelled lubricating material whose main ingredient is powdered molybdenum disulfide, graphite, graphite grease or fiber grease so that life of the lubricant 57 is longer. The lubricant 57 may be coated only on an opening side of the holding groove 34.

In an exhaust gas recirculation device, when the engine is turned off, a valve 3 of EGR control valve is moved in a valve closing direction and stopped at a position beyond fully closed valve position by a given flap opening degree. In case that the valve 3 rests at the fully closed valve position during a period when the engine is off, an entire outer circumference of the valve 3 comes in contact with an entire inner circumference of a nozzle 2 so that the valve 3 is likely to adhere to the nozzle 2 due to deposits attached thereto. However, as the valve 3 is opened by the flap opening degree, adhesion of the valve 3 to the nozzle 2 due to the depositions hardly occurs so that, on starting the engine, the valve 3 can be easily moved. Accordingly, the valve 3 can be accurately controlled to a given flap opening degree so that necessary EGR volume of EGR gas may be mixed with air flowing in the intake pipe.

This application is a divisional application of European patent application no. 03025982.4 (the "parent application"), also published under no. EP-1420158. The original claims of the parent application are repeated below in the present specification and form part of the content of this divisional application as filed.
1. An exhaust gas recirculation device having
   a valve housing (1) provided with an exhaust gas circulation passage (15) communicating with an exhaust gas passage of an internal combustion engine for recirculating a part of exhaust gas to an intake air passage,
   a flow volume control valve (2, 3, 4) provided with a valve (3) accommodated movably in the valve housing (1) to change an opening degree of the exhaust gas circulation passage (15), and
   a power unit (5 to 8) for rotatably driving the flow volume control valve, **characterized in that**:
   when or after the internal combustion engine is turned off, the power unit (5 to 8) causes the valve (3) of the flow volume control valve to hold at a rest position where the valve (3) is opened by a given flap opening degree from a fully closed valve position.
2. An exhaust gas recirculation device according to claim 1, wherein the rest position is a position where the valve is opened in a valve closing direction or in a valve opening direction by the given flap opening degree from the fully closed valve position.
3. An exhaust gas recirculation device according to claim 1 or 2, wherein the flow volume control valve (2 to 4) has a valve shaft (4) operative together with the valve (3) and the power unit (5 to 8) has a drive motor (5) provided with a motor shaft from which driving force of the drive motor (5) generates and a power transmission mechanism (6 to 8) through which the driving force of the drive motor (5) is transmitted to the valve shaft (4).
4. An exhaust gas recirculation device having
   a valve housing (1) provided with an exhaust gas circulation passage communicating with an exhaust gas passage of an internal combustion engine for recirculating a part of exhaust gas to an intake air passage,
   a flow volume control valve (2 to 4) provided with a valve (3) accommodated movably in the valve housing (1) to change an opening degree of the exhaust gas circulation passage (15), and
   a power unit (5 to 8) for rotatably driving the flow volume control valve, **characterized in that**:
   the power unit (5 to 8) causes the valve (3) of the flow volume control valve (2 to 4) to execute an opening and closing swing operation so as to pass through the fully closed valve position by a given flap opening degree during a given period just after the internal combustion engine is turned off or just before the internal combustion engine is turned on.
5. An exhaust gas recirculation device according to claim 4, wherein the given period expires when the opening and closing swing operation passing through the fully closed valve position has been repeated by a predetermined plural times.
6. An exhaust gas recirculation device according to claim 4, wherein the flow volume control valve (2 to 4) has a valve shaft (4) operative together with the valve (3) and the power unit (5 to 8) has a drive motor (5) generating a drive force for rotating the valve shaft and, further, wherein the given period expires when operating current to be supplied to the drive motor (5) has become below a predetermined value.
7. An exhaust gas recirculation device according to claim 4 or 5, wherein the flow volume control valve (2 to 4) has a valve shaft (4) operative together with the valve (3) and the power unit (5 to 8) has a drive motor (5) provided with a motor shaft from which driving force of the drive motor generates and a speed reduction mechanism (6 to8) through which the driving force of the drive motor (5) is transmitted to the valve shaft (4) so that a rotation speed of the valve shaft (4) is lower by a predetermined speed reduction ratio than that of the motor shaft.
8. An exhaust gas recirculation device according to any one of claims 1 to 7, wherein the valve (3) of the flow volume control valve (2 to 4) is provided along a circumferential periphery thereof with a sealing member (33) for preventing exhaust gas leakage through a clearance between the exhaust gas circulation passage (15) and the valve (3) when the valve (3) is at the fully closed valve position.
9. An exhaust gas recirculation device having
   a valve housing (1) provided with an exhaust gas circulation passage (15) communicating with an exhaust gas passage of an internal combustion engine for recirculating a part of exhaust gas to an intake air passage,
   a flow volume control valve (2 to 4) provided with a valve (3) accommodated movably in the valve housing (1) to change an opening degree of the exhaust gas circulation passage (15), and
   a power unit (5 to 8) for rotatably driving the flow volume control valve (2 to 4), **characterized in that**:
   the valve housing (1) is provided around the exhaust gas circulation passage (15) or in a vicinity of the valve (3) at the fully closed valve position with a coolant circulation conduit (52) through which engine coolant circulates.
10. An exhaust gas recirculation device according to claim 9, wherein the engine coolant is forcibly circulated by an electric pump during a given period just after the internal combustion engine is turned off.
11. An exhaust gas recirculation device according to claim 10, wherein the given period is a period until lapse of a predetermined time or termination of dead soak after turning off the internal combustion engine.
12. An exhaust gas recirculation device having
   a valve housing (1) provided with an exhaust gas circulation passage (15) communicating with an exhaust gas passage of an internal combustion engine for recirculating a part of exhaust gas to an intake air passage,
   a flow volume control valve (2 to 4) provided with a valve (3) accommodated movably in the valve housing (1) to change an opening degree of the exhaust gas circulation passage (15),
   a motor housing (25) formed integrally with the valve housing (1) and positioned in a vicinity of the exhaust gas circulation passage (15), and
   a power unit (5 to 8) including a drive motor (5) for rotatably driving the valve (3) of the flow volume control valve (2 to 4), the drive motor (3) being accommodated in and fixed to the motor housing (25), **characterized in that**;
   a heat insulating means (26, 27, 54) is provided in the valve housing (1) and/or the motor housing (25) for insulating heat to be transmitted between the exhaust gas circulation passage (15) and the drive motor (5).
13. An exhaust gas recirculation device according to claim 12, further having
   a gear case (24) formed integrally with the valve housing (1) and positioned in a vicinity of the exhaust gas circulation passage (15) and adjacent to the motor housing (25),
   wherein the flow volume control valve (2 to 4) has a valve shaft (4) operative together with the valve (3), the power unit (5 to 8) has a drive motor (5) provided with a motor shaft through which a driving force of the drive motor (5) generates and a speed reduction mechanism (6 to 8) comprising a plurality of gears (6 to 8) which are rotatably accommodated in the gear housing (24) and through which the driving force of the drive motor (5) is transmitted to the valve shaft (4) from the motor shaft so that a rotation speed of the valve shaft (4) is lower by a predetermined speed reduction ratio than that of the motor shaft, and, further,
   wherein the heat insulating means (26, 27, 54) is provided in the valve housing (1), the motor housing (25) and/or the gear case (24) for insulating heat to be transmitted between the exhaust gas circulation passage (15) and the gear case (24).
14. An exhaust gas recirculation device according to claim 12 or 13, wherein the heat insulating means (26, 27, 54) is a coolant circulation conduit (27) through which engine coolant circulates, an air gap layer (26) into which atmosphere is introduced, or a boundary portion (54) of the valve housing (1) and the motor housing (25) whose cross sectional area is smaller than that of the other portion of the valve housing (1) or the motor housing (25) existing between the exhaust gas circulation passage (15) and the drive motor (5).
15. An exhaust gas recirculation device having
   a valve housing (1) provided with an exhaust gas circulation passage (15) communicating with an exhaust gas passage of an internal combustion engine for recirculating a part of exhaust gas to an intake air passage, and
   a flow volume control valve (2 to 4) provided with a valve (3) accommodated movably in the valve housing (1) to change an opening degree of the exhaust gas circulation passage (15) and a valve shaft (4) operative together with the valve (3), **characterized in that**:
   the valve shaft (4) on an axial end side thereof is partly supported rotatably by a bearing (22) fixed in the valve housing (1).
16. An exhaust gas recirculation device according to claim 15, wherein the valve housing (1) has a shaft hole (28, 23) in which the bearing (22) is press fitted and the valve shaft (4) extends through the bearing (22) toward the exhaust gas circulation passage (15), and, further, wherein a lubricant (56) is disposed in a clearance between an outer surface of the valve shaft (4) and an inner wall of the shaft hole (28) at a position between the exhaust gas circulation passage (15) and the bearing (22).
17. An exhaust gas recirculation device according to claim 15, wherein the valve housing (1) is provided with a cylindrical nozzle (2) in which the valve (3) is rotatably accommodated to open or close the exhaust gas circulation passage (15), the valve (3) is provided at a circumferential periphery thereof with a ring shaped holding groove (34) and a seal ring (33) held by the holding groove (34), the seal ring (33) coming in slidable contact with an inner wall of the nozzle (2) constituting the exhaust gas circulation passage (15), and a lubricant (57) is disposed in a clearance between the holding groove (34) and the seal ring (33).
18. An exhaust gas recirculation device according to any one of claims 15 to 17, wherein the lubricant (56, 57) is a solid or gelled lubricating material whose main ingredient is powdered molybdenum disulfide, graphite, graphite grease or fiber grease.
19. An exhaust gas recirculation device according to any one of claims 15 to 18, further having:
   a power unit (5 to 8) comprising a drive motor (5) having a motor shaft and a rotating power transmission member (6 to 8) through which a rotating power of the drive motor (5) is transmitted from the motor shaft to the valve shaft (4) so that the flow volume control valve (2 to 4) is rotatably driven.

## Claims

1. An exhaust gas recirculation device having
a valve housing (1) provided with an exhaust gas circulation passage communicating with an exhaust gas passage of an internal combustion engine for recirculating a part of exhaust gas to an intake air passage,
a flow volume control valve (2 to 4) provided with a valve (3) accommodated movably in the valve housing (1) to change an opening degree of the exhaust gas circulation passage (15), and
a power unit (5 to 8) for rotatably driving the flow volume control valve, **characterized in that**:
the power unit (5 to 8) causes the valve (3) of the flow volume control valve (2 to 4) to execute an opening and closing swing operation so as to pass through the fully closed valve position by a given flap opening degree during a given period just after the internal combustion engine is turned off or just before the internal combustion engine is turned on.

2. An exhaust gas recirculation device according to claim 1, wherein the given period expires when the opening and closing swing operation passing through the fully closed valve position has been repeated by a predetermined plural times.

3. An exhaust gas recirculation device according to claim 1, wherein the flow volume control valve (2 to 4) has a valve shaft (4) operative together with the valve (3) and the power unit (5 to 8) has a drive motor (5) generating a drive force for rotating the valve shaft and, further, wherein the given period expires when operating current to be supplied to the drive motor (5) has become below a predetermined value.

4. An exhaust gas recirculation device according to claim 1 or 2, wherein the flow volume control valve (2 to 4) has a valve shaft (4) operative together with the valve (3) and the power unit (5 to 8) has a drive motor (5) provided with a motor shaft from which driving force of the drive motor generates and a speed reduction mechanism (6 to 8) through which the driving force of the drive motor (5) is transmitted to the valve shaft (4) so that a rotation speed of the valve shaft (4) is lower by a predetermined speed reduction ratio than that of the motor shaft.

5. An exhaust gas recirculation device according to any one of claims 1 to 4, wherein the valve (3) of the flow volume control valve (2 to 4) is provided along a circumferential periphery thereof with a sealing member (33) for preventing exhaust gas leakage through a clearance between the exhaust gas circulation passage (15) and the valve (3) when the valve (3) is at the fully closed valve position.
